# FASCICULE DE BREVET EUROPEEN

(11) **EP 0 653 351 B1**
(45) Date de publication et mention de la délivrance du brevet: **17.02.1999**
(21) Numéro de dépôt: 94402608.7
(22) Date de dépôt: 17.11.1994
(51) Int. Cl.: B64F 1/20, F21Q 3/00, F21V 31/02

(54) **Feu de balisage pour pistes ou voies de roulement d'aéronefs**
Flugzeugsmarkierungsleuchter für Fahr- oder Rollbahnen
Airfield runway marker

(30) Priorité: 17.11.1993 FR 9313716
(43) Date de publication de la demande: 17.05.1995
(73) Titulaire: THORN EUROPHANE, F-75008 Paris (FR)
(72) Inventeur: Urbaing, Bruno, B-6001 Marcinelle (BE)
(74) Mandataire: Joly, Jean-Jacques

(56) Documents cités:
- EP-A- 0 285 488
- US-A- 3 369 113

## Description

La présente invention concerne un feu de balisage pour pistes ou voies de roulement d'aéronefs du type comprenant un capot encastrable dans le sol, une source lumineuse située à l'intérieur du capot, un couvercle fermant le capot et muni d'au moins une ouverture et un bloc optique coopérant avec la source lumineuse et monté dans l'ouverture du couvercle de façon étanche avec interposition d'un joint d'étanchéité dont la forme épouse sensiblement celle du pourtour d'une partie de base du bloc optique et qui est comprimé au moyen d'un organe presseur appliqué contre une surface inférieure du bloc optique.

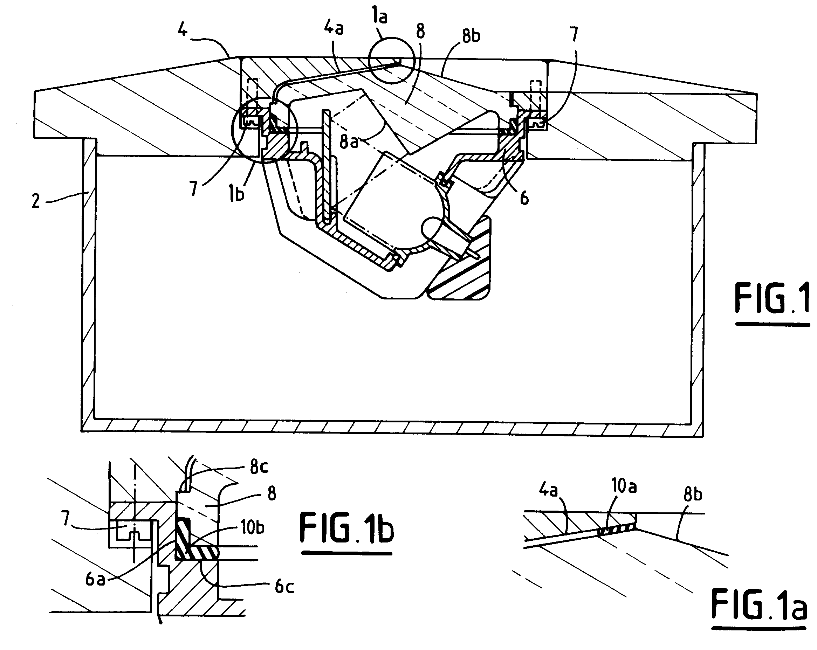

Un feu de balisage connu de ce type est représenté aux figures 1, 1a et 1b. Le bloc optique 8 se présente sous forme d'un prisme en verre logé dans une ouverture du couvercle 4 fermant le capot encastrable 2. Le prisme 8 présente une face inférieure 8a formant une fenêtre d'entrée de flux lumineux et une face supérieure 8b inclinée formant une fenêtre de sortie apte à diriger un faisceau lumineux de sorte qu'il puisse être vu depuis le poste de pilotage d'un avion circulant sur une voie de roulement. Le bloc optique 8 est maintenu par serrage au moyen d'une pièce inférieure de maintien 6 fixée au couvercle par des vis 7. La pièce de maintien 6 sert également de support à une source lumineuse avec son réflecteur et à un miroir renvoyant le flux lumineux issu de la source vers la fenêtre d'entrée 8a du prisme 8.

L'étanchéité entre le prisme 8 et le couvercle 4 est assurée par des joints 10a, 10b respectivement au niveau de la partie supérieure du prisme 8 et au niveau du pourtour inférieur de celui-ci.

Le joint 10a (figure 1a) est comprimé sous l'action de la pièce de maintien 6 entre une partie supérieure du prisme et une face en regard 4a du couvercle. Le joint 10a a essentiellement pour fonctions de protéger les surfaces du prisme contre les contraintes mécaniques résultant de contacts avec le couvercle et d'éviter le ruissellement d'eau et l'entrée de poussières entre le couvercle et le prisme.

Le joint 10b (figure 1b) assure essentiellement l'étanchéité entre le prisme 8 et le couvercle 4. Il a une section transversale en L à l'intérieur duquel se loge l'arête inférieure du prisme 8. La pièce de maintien 6 présente un épaulement dont les surfaces 6a, 6c épousent les faces extérieures du joint 10b de manière à sertir le prisme dans le couvercle par l'intermédiaire du joint 10b sous l'effet du serrage par les vis 7. L'effort vertical de serrage est repris par l'appui de la partie supérieure du prisme contre le couvercle sans matière intermédiaire, ce qui entraîne un risque de cassure.

Afin de garantir une bonne assise du joint 10, il est nécessaire d'usiner les surfaces métalliques sur lesquelles il s'appuie, dans ce cas les surfaces 6a, 6c de la pièce inférieure de maintien 6.

Or, ces opérations d'usinage sont relativement longues et, dans le cas présent, entraînent un surcoût sensible en manipulations puisqu'elles demandent une installation de la pièce de maintien sur un plan d'usinage uniquement pour préparer les surfaces de contact avec le joint.

Dans d'autres exemples de l'art antérieur, le joint n'est pas reçu uniquement sur la pièce de maintien, mais entre celle-ci et la base du couvercle autour du bloc optique. Toutefois, il existe toujours la nécessité d'usiner une surface d'appui du joint sur la pièce de maintien et, au niveau du couvercle, une surface de contact qui doit être souvent inclinée selon un plan particulier afin de suivre une surface de butée inclinée correspondante du bloc optique.

Un objet de l'invention est de fournir un feu de balisage dans lequel le montage étanche du bloc optique dans le couvercle ne demande qu'un minimum d'interventions nécessaires pour préparer les surfaces métalliques de contact avec le joint d'étanchéité.

Un autre objet de l'invention et de prévoir une fixation précise et solide du bloc optique par rapport au couvercle, tout en permettant son démontage lors d'opérations d'entretien.

Ces objets sont atteints par un feu de balisage du type défini en tête de la description et dans lequel, conformément à l'invention, le couvercle offre un logement pour le joint, dont les surfaces de contact avec le joint sont définies par une paroi située en regard de la partie de base du bloc optique et un rebord interne situé à la partie supérieure de cette paroi, le rebord interne formant une butée pour le joint parallèle au plan moyen du couvercle, et en ce que la partie de base du bloc optique forme un coin comprimant le joint dans son logement sous l'action de l'organe presseur, le joint étant réalisé en un matériau susceptible de fluer sous une contrainte en compression afin de combler l'espace entre la partie de base du bloc optique et la paroi en regard.

Avantageusement, le joint d'étanchéité présente au moins une partie ayant une section rectangulaire et la partie de base du bloc optique présente un épaulement qui agit sur une surface inférieure du joint d'étanchéité pour appliquer celui-ci contre les surfaces de contact du couvercle.

Avantageusement encore, le joint d'étanchéité est prolongé à sa partie supérieure par une lèvre d'étanchéité périphérique située entre le pourtour du bloc optique et une paroi en regard du couvercle bordant l'ouverture de celui-ci

Selon un mode particulier de réalisation du feu de balisage conforme à l'invention, le bloc optique comprend deux prismes montés côte à côte et le joint d'étanchéité présente, en plan, une forme de "8" dont la branche centrale s'insère entre les deux prismes.

La branche centrale du joint est alors prolongée à sa partie supérieure par des lèvres situées chacune entre une face de réflexion interne d'un prisme et une paroi en regard du couvercle.

L'invention sera mieux comprise et ces avantages apparaîtront plus clairement à la lecture de la description détaillée qui suit, donnée de manière non limitative, en référence aux dessins en annexe dans lesquel :
- la figure 1 est une vue en section verticale d'un exemple de feu de balisage selon l'art antérieur,
- la figure 1a est une vue de détail à échelle agrandie montrant un premier joint d'étanchéité du feu de balisage de la figure 1,
- la figure 1b est une vue de détail à échelle agrandie montrant un deuxième joint d'étanchéité du feu de balisage de la figure 1,
- la figure 2 est une vue éclatée en perspective des éléments composant un feu de balisage selon un mode de réalisation de la présente invention,
- la figure 3 est une vue en section verticale du feu de balisage de la figure 2, et
- les figures 4a et 4b sont des vues de détail à échelle agrandie montrant le montage du joint respectivement avant et après son serrage, dans le feu de balisage de la figure 2.

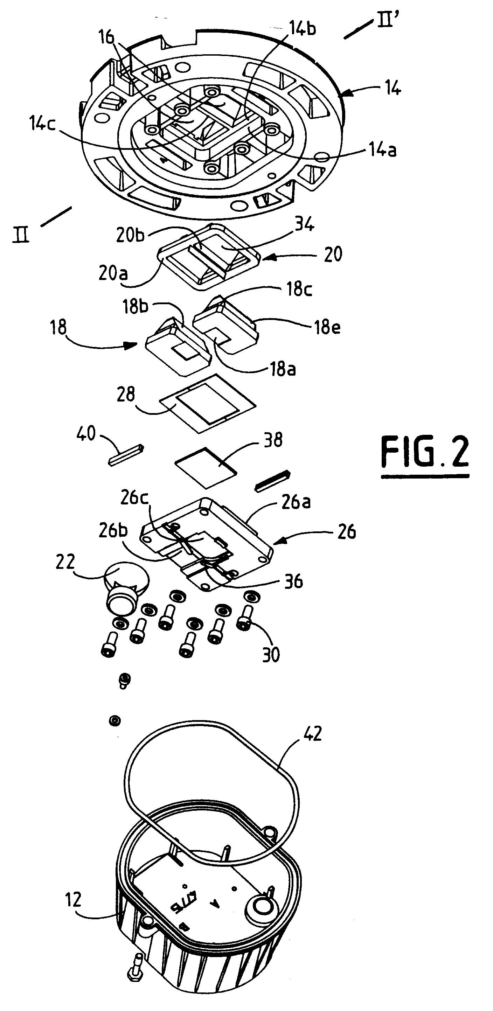

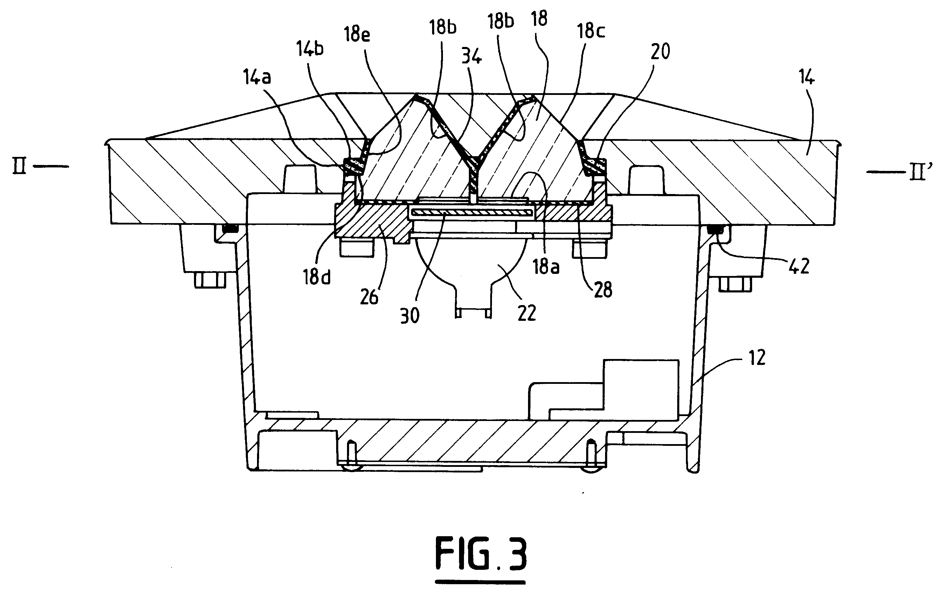

Comme le montrent les figures 2 et 3, le feu de balisage comprend un capot 12 encastrable dans le sol surmonté d'un couvercle 14 qui comprend une ouverture centrale destinée à recevoir un bloc optique formé de deux prismes identiques 18 disposés côte à côte.

Chaque prisme 18 présente à sa face inférieure une fenêtre 18a d'entrée de flux lumineux provenant d'une source de lumière 22 logée dans le capot 12. Après réflexion sur une face interne 18b du prisme, le flux lumineux est dirigé vers l'extérieur à travers une face de sortie 18c du prisme. Chaque prisme est conçu pour que le faisceau de balisage ainsi produit présente une inclinaison prédéterminée, les faisceaux issus des deux prismes étant décalés mutuellement de 180° en azimut. L'ouverture du couvercle est en fait constituée par deux fenêtres 16 séparées par une traverse 14c du couvercle (figure 2) et dans lesquelles apparaissent les faces de sorties 18c des prismes.

Le montage étanche des prismes 18 dans le couvercle 14 est assuré au moyen d'un joint d'étanchéité 20 qui est comprimé entre les prismes 18 et le couvercle au moyen d'un organe presseur 26 agissant contre les faces inférieures des prismes par l'intermédiaire d'une plaquette 28 de transmission d'effort.

Le joint 20 présente, en plan, une forme de "8" avec une partie périphérique 20a et une branche centrale 20b. Cette dernière délimite avec la partie périphérique deux ouvertures dans lesquelles se logent les bases des prismes 18. La branche centrale 20b s'interpose sans jeu entre les deux prismes 18 tout en permettant une libre insertion de ceux-ci.

La partie périphérique 20a du joint d'étanchéité est serrée entre, d'une part, des surfaces de contact usinées 14a, 14b formant partie du couvercle et, d'autre part, des faces 18d, 18e formant partie du pourtour des prismes 18 à la base de ceux-ci.

Les surfaces de contact 14a et 14b forment un épaulement interne du couvercle et sont respectivement perpendiculaire et parallèle au plan moyen de celui-ci, la surface 14b étant tournée ves l'intérieur du capot 12.

Les faces 18d, 18e, situées en regard respectivement des surfaces 14b, 14a, définissent un épaulement à la base des prismes 18. La face 18d est parallèle au plan moyen du couvercle et tournée vers l'extérieur du capot. La face 18e fait partie du pourtour des prismes et s'étend, depuis la face 18d et vers l'extérieur en présentant une légère inclinaison vers le centre du bloc optique, donnant à la base de celui-ci une forme pyramidale.

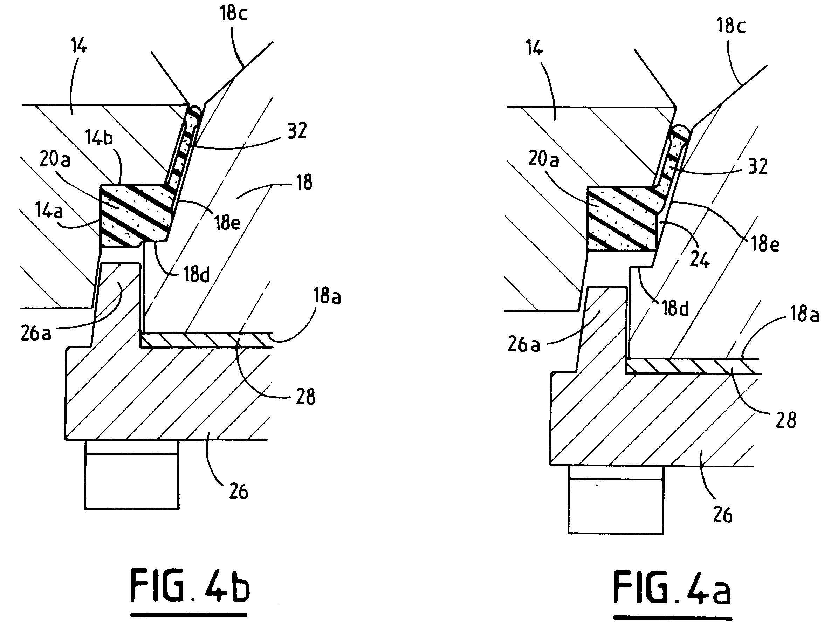

La partie périphérique 20a du joint présente à l'état non comprimé une section droite sensiblement perpendiculaire (figure 4a). Il est inséré dans le couvercle 14, l'épaulement défini par les surfaces 14a et 14b épousant la forme extérieure de la périphérie du joint.

Lorsque les prismes 18 sont insérés dans les ouvertures du joint 20, ceux-ci prennent appui par leur pourtour incliné 18e contre l'arête de la partie périphérique 20a opposée à celle logée dans l'épaulement du couvercle 14, la face 18d étant à une certaine distance de la surface inférieure du joint. Il existe alors un espace 24 entre le joint et le pourtour 18e des prismes 18.

Le serrage du joint est obtenu par pression contre les faces inférieures des prismes 18, grâce à l'organe presseur 26 qui prend appui autour des fenêtres d'entrée 18a par l'intermédiaire de la plaquette de transmission d'effort 28. Cette plaquette intercalaire peut être en un matériau transparent ou, comme dans l'exemple présent en un matériau opaque, par exemple en polytétrafluoroéthylène (PTFE), le plomb ou un alliage de ce dernier, auquel cas elle comporte une découpe centrale devant les fenêtres d'entrée des prismes 18. L'organe presseur 26 est fixé de manière amovible sur la face inférieure du couvercle par des vis 30

Lors du serrage, le pourtour 18e des prismes agit sur la partie périphérique 20a du joint à la manière d'un coin. Le joint 20 est en un matériau susceptible de fluer sous contrainte en compression, tel qu'un élastomère. Ce fluage permet de combler l'espace libre 24 lors du serrage, lequel est poursuivi jusqu'à et légèrement après venue de la face 18d en butée contre la surface inférieure du joint 20 (figure 4b).

La course de serrage, ainsi que les cotes du joint et des différentes surfaces sur lesquelles il vient en contact sont déterminées de sorte que le fluage du matériau du joint soit suffisant pour bien combler l'espace libre 24 et exercer une pression suffisante contre le bord incliné 18e du pourtour des prismes et la surface 14a du couvercle en regard. Cette pression contribue en outre à appliquer les prismes 18 ainsi contre la branche 20b du joint.

La partie périphérique 20a du joint est prolongée vers le haut par une lèvre d'étanchéité 32 qui fait une seule pièce avec le joint. La lèvre 32 s'insère entre le pourtour inciné 18c de la base du joint et le bord de l'ouverture 16 du couvercle, au-dessus de l'épaulement formé par les surfaces 14a, 14b. Afin de ne pas gêner le serrage du joint 20, la lèvre d'étanchéité 32 n'offre qu'une zone réduite de contact avec les surfaces adjacentes des prismes et du couvercle, par un bourrelet situé à son extrémité supérieure (figures 4a, 4b).

En outre, la branche centrale 20b du joint est prolongée à sa partie supérieure par deux lèvres d'étanchéité 34 qui font une seule pièce avec le joint et qui s'insèrent entre les faces de réflexion 18b des prismes 18 et les surfaces en regard de la traverse 14c du couvercle 14.

Afin d'assurer le centrage et le maintien en place des prismes 18 avec la plaquette de transmission d'effort 28, l'organe presseur 26 est doté d'une nervure périphérique 26a qui s'introduit sous le bord inférieur de la portion périphérique 20a du joint, dans l'intervalle entre le pourtour de prismes 18 et les parois usinées 14b du couvercle.

La source lumineuse 22 est montée dans l'organe presseur 26 par une glissière 26b qui mène à une ouverture 26c où elle y est bloquée en place par une paire de languettes élastiques 36 traversant la glissière. Un filtre coloré 38, maintenu sur deux bords opposés par des baguettes de protection 40, peut être installé au-dessus de l'ouverture 26c de l'organe presseur 26 dans un embrèvement de ce dernier.

Le capot 12 forme un espace contenant tous les éléments montés sous le couvercle 14 et notamment l'organe presseur 26 avec sa source lumineuse 22, ainsi que tous les éléments de connexion entre celle-ci est une ligne enterrée de distribution d'énergie. Le couvercle 14 est maintenu vissé sur le capot 12 avec interposition d'un joint d'étanchéité 42.

Bien que l'on ait envisagé ci-dessus un bloc optique formé de deux prismes, il apparaît immédiatement que l'invention n'est pas limitée à ce mode de réalisation et englobe aussi le cas où le bloc optique est constitué par un seul prisme ou tout autre système optique dont le pourtour est conformé pour agir sur le joint d'étanchéité à la manière d'un coin.

Du fait que le joint est réalisé en matériau susceptible de fluage, il n'est pas essentiel que sa section, dans son état non-comprimé, soit exactement conforme avec les bords usinés en équerre du couvercle. Elle peut par exemple présenter des plans légèrement inclinés vis-à-vis des faces usinées ou même des nervures.

La conception du montage étanche du bloc optique dans le couvercle du feu de balisage conforme à l'invention fait qu'il est seulement nécessaire d'usiner les faces 14a, 14b du couvercle recevant le joint 20. Aucun usinage d'une surface de l'organe presseur n'est requis pour logement du joint, comme c'est le cas dans le dispositif de la figure 1. En outre, la disposition de la face 14b parallèlement au plan moyen du couvercle et, avantageusement de la face 14a perpendiculairement à ce plan permet un usinage des plus aisés.

On notera encore que le montage du bloc optique permet d'assurer non seulement une parfaite étanchéité mais aussi une fixation précise et solide dans le couvercle, tout en autorisant le démontage notamment pour accéder à l'intérieur du capot lors d'opérations d'entretien.

## Revendications

1. Feu de balisage pour pistes ou voies de roulement d'aéronefs, comprenant un capot (12) encastrable dans le sol, une source lumineuse (22) située à l'intérieur du capot, un couvercle (14) fermant le capot et muni d'au moins une ouverture, et un bloc optique (18) coopérant avec la source lumineuse et monté dans l'ouverture du couvercle de façon étanche avec interposition d'un joint d'étanchéité (20) dont la forme épouse sensiblement celle du pourtour (18e) d'une partie de base du bloc optique et qui est comprimé au moyen d'un organe presseur (26) appliqué contre une surface inférieure du bloc optique, caractérisé en ce que :
- le couvercle (14) offre un logement pour le joint (20), dont les surfaces de contact avec le joint sont définies par une paroi (14a) située en regard de la partie de base du bloc optique (18) et un rebord interne (14b) situé à la partie supérieure de cette paroi, le rebord interne (14b) formant une butée pour le joint parallèle au plan moyen du couvercle, et en ce que
- la partie de base du bloc optique (18) forme un coin comprimant le joint (20) dans son logement sous l'action de l'organe presseur, le joint étant réalisé en un matériau susceptible de fluer sous une contrainte en compression afin de combler l'espace (24) entre la partie de base (18e) du bloc optique et la paroi en regard (14a).

2. Feu de balisage selon la revendication 1, caractérisé en ce que les surfaces de contact (14a, 14b) définissant le logement du joint d'étanchéité (20) dans le couvercle (14) sont usinées respectivement perpendiculairement et parallèlement au plan moyen du couvercle.

3. Feu de balisage selon l'une quelconque des revendications 1 et 2, caractérisé en ce que le joint d'étanchéité (20) est en un matériau élastomère

4. Feu de balisage selon l'une quelconque des revendications 1 à 3, caractérisé en ce que la partie de base du bloc optique présente un épaulement (18d) qui agit sur une partie de surface inférieure du joint d'étanchéité (20) pour appliquer celui-ci contre les surfaces de contact (14a, 14b) du couvercle.

5. Feu de balisage selon l'une quelconque des revendications 1 à 4, caractérisé en ce que le joint d'étanchéité (20) est prolongé à sa partie supérieure par une lèvre d'étanchéité périphérique (32) située entre le pourtour du bloc optique (18) et une paroi en regard du couvercle bordant l'ouverture de celui-ci.

6. Feu de balisage selon l'une quelconque des revendications 1 à 5, caractérisé en ce que le bloc optique comprend deux prismes montés côte à côte et le joint d'étanchéité (20) présente, en plan, une forme de "8" dont la branche centrale (20b) s'insère entre les deux prismes.

7. Feu de balisage selon la revendication 6, caractérisé en ce que la branche centrale (20b) du joint est prolongée à sa partie supérieure par des lèvres (34) situées chacune entre une face (18b) de réflexion interne d'un prisme et une paroi en regard du couvercle (14).

8. Feu de balisage selon l'une quelconque des revendications 1 à 7, caractérisé en ce que l'organe presseur (26) prend appui sur une surface inférieure du bloc optique (18) par l'intermédiaire d'une plaquette (28) de transmission d'effort.

## Claims

1. A beacon light fixture for aircraft runways or taxiways comprising a pod (12) that can be embedded in the ground, a light source (22) situated inside the pod, a cover (14) closing the pod and provided with at least one opening, and an optical unit (18) co-operating with the light source and mounted in the opening of the cover in sealed manner via a sealing gasket (20) interposed therebetween, the gasket being of a shape that substantially matches that of a perimeter (18e) of a base portion of the optical unit, and being compressed by means of a presser member (26) applied against a bottom surface of the optical unit, the light fixture being characterised in that:
the cover (14) provides a seat for the gasket (20), with the contact surfaces of said seat that are in contact with the gasket being defined by a wall (14a) facing the base portion of the optical unit (18) and an inner rim (14b) situated at the top portion of this wall, the inner rim (14b) forming an abutment for the gasket parallel to the general plane of the cover; and in that
the base portion of the optical unit (18) forms a wedge which compresses the gasket (20) in its seat under the force from the presser member, the gasket being made of a material capable of exhibiting creep under compressive stress so as to fill the gap (24) between the base portion (18e) of the optical unit and the facing wall (14a).

2. A light fixture according to claim 1, characterised in that the contact surfaces (14a, 14b) defining the seat for the sealing gasket (20) in the cover (14) are machined respectively perpendicularly and parallel to the general plane of the cover.

3. A light fixture according to any one of claims 1 and 2, characterised in that the sealing gasket (20) is made of an elastomer material.

4. A light fixture according to any one of claims 1 to 3, characterised in that the base portion of the optical unit has a shoulder (18d) which acts against a bottom surface portion of the sealing gasket (20) in order to urge the gasket against the contact surfaces (14a, 14b) of the cover.

5. A light fixture according to any one of claims 1 to 4, characterised in that the top of the sealing gasket (20) is extended by a peripheral sealing lip (32) situated between the perimeter of the optical unit (18) and a facing wall of the cover that surrounds the opening in the cover.

6. A light fixture according to any one of claims 1 to 5, characterised in that the optical unit comprises two prisms mounted side by side and the sealing gasket (20) is configured like a figure "8" in plan-view, with a central branch (20b) thereof being inserted between the two prisms.

7. A light fixture according to claim 6, characterised in that the top of the central branch (20b) of the gasket is extended by lips (34), each situated between an internal reflection face (18b) of a prism and a facing wall of the cover (14).

8. A light fixture according to any one of claims 1 to 7, characterised in that the presser member (26) bears against a bottom surface of the optical unit (18) via a force-transmission plate (28).

## Patentansprüche

1. Befeuerung für Luftfahrzeug-Rollpisten oder -bahnen, aufweisend: eine in den Boden einlaßbare Haube (12), eine im Inneren der Haube angeordnete Lichtquelle (22), eine Kappe (14), welche die Haube verschließt und mit wenigstens einer Öffnung versehen ist, und einen optischen Block (18), der mit der Lichtquelle zusammenarbeitet und in der Öffnung der Kappe durch Einfügung einer Dichtungsverbindung (20) in dichter Art angebracht ist, wobei sich die Gestalt der Dichtungsverbindung (20) im wesentlichen an diejenige des äußeren Umfangs (18e) eines Basisbereichs des optischen Blocks anpaßt und wobei die Dichtungsverbindung (20) mit Hilfe eines Druckelements (26) zusammengedrückt ist, welches an einer Innenseite des optischen Blocks aufgebracht ist, dadurch gekennzeichnet, daß
- die Kappe (14) einen Sitz für die Verbindung (20) bietet, dessen Berührungsflächen mit der Verbindung durch eine Wand (14a), die gegenüber dem Basisbereich des optischen Blocks (18) angeordnet ist, und durch einen Innenrand (14b) definiert sind, der an dem oberen Bereich dieser Wand angeordnet ist, wobei der Innenrand (14b) einen Anschlag für die Verbindung parallel zur Mittelebene der Kappe bildet, und daß
- der Basisbereich des optischen Blocks (18) eine Ecke bildet, welche die Verbindung (20) in ihrem Sitz unter der Wirkung des Druckelements zusammendrückt, wobei die Verbindung aus einem Material hergestellt ist, das unter einer Druckbeanspruchung fließfähig ist, damit der Raum (24) zwischen dem Basisbereich (18e) des optischen Blocks und der gegenüberliegenden Wand (14a) ausgefüllt wird.

2. Befeuerung nach Anspruch 1, dadurch gekennzeichnet, daß die Berührungsfläche (14a) bzw. die Berührungsfläche (14b), wobei diese Berührungsfiächen (14a, 14b) den Sitz der Dichtungsverbindung (20) in der Kappe (14) definieren, rechtwinklig bzw. parallel zur Mittelebene der Kappe bearbeitet ist.

3. Befeuerung nach einem der Ansprüche 1 und 2, dadurch gekennzeichnet, daß die Dichtungsverbindung (20) aus einem elastomeren Material ist.

4. Befeuerung nach einem der Ansprüche 1 bis 3, dadurch gekennzeichnet, daß der Basisbereich des optischen Blocks eine Schulter (18d) aufweist, welche auf einen Bereich der Innenfläche der Dichtungsverbindung (20) wirkt, um diese auf die Berührungsflächen (14a, 14b) der Kappe aufzubringen.

5. Befeuerung nach einem der Ansprüche 1 bis 4, dadurch gekennzeichnet, daß die Dichtungsverbindung (20) an ihrem oberen Bereich durch eine über den Umfang verlaufende Dichtungslippe (32) verlängert ist, die zwischen dem äußeren Umfang des optischen Blocks (18) und einer gegenüberliegenden Wand der Kappe angeordnet ist, wobei diese Wand die Öffnung der Kappe begrenzt.

6. Befeuerung nach einem der Ansprüche 1 bis 5, dadurch gekennzeichnet, daß der optische Block zwei Prismen aufweist, welche Seite an Seite angeordnet sind, und die Dichtungsverbindung (20) im Grundriß eine Gestalt einer "8" aufweist, deren mittlerer Schenkel (20b) sich zwischen die zwei Prismen einfügt.

7. Befeuerung nach Anspruch 6, dadurch gekennzeichnet, daß der mittlere Schenkel (20b) der Verbindung an seinem oberen Bereich durch Lippen (34) verlängert ist, von denen jede zwischen einer inneren Reflexionsfläche (18b) eines Prismas und einer gegenüberliegenden Wand der Kappe (14) angeordnet ist.

8. Befeuerung nach einem der Ansprüche 1 bis 7, dadurch gekennzeichnet, daß das Druckelement (26) auf einer Innenseite des optischen Blocks (18) mittels einer Kraftübertragungsplatte (28) abgestützt ist.
